# EUROPÄISCHE PATENTSCHRIFT

(11) **EP 2 434 898 B1**
(45) Veröffentlichungstag und Bekanntmachung des Hinweises auf die Patenterteilung: **19.11.2014**
(21) Anmeldenummer: 10722091.5
(22) Anmeldetag: 28.05.2010
(51) Int. Cl.: G07F 11/58, G07F 11/46, A21B 7/00, A21B 1/48

(54) **BACKWARENAUSGABEVORRICHTUNG**
BAKED GOODS DISTRIBUTING DEVICE
DISPOSITIF DE DÉFOURNEMENT DE PRODUITS DE BOULANGERIE-PÂTISSERIE

(30) Priorität: 29.05.2009 DE 102009026620
(43) Veröffentlichungstag der Anmeldung: 04.04.2012
(73) Patentinhaber: R. Weiss Verpackungstechnik GmbH & Co. KG, 74564 Crailsheim (DE)
(72) Erfinder: WEISS, Reinald, 91626 Schopfloch (DE)
(74) Vertreter: Schlief, Thomas P.
(86) Internationale Anmeldenummer: PCT/EP2010/057395
(87) Internationale Veröffentlichungsnummer: WO 2010/136556

(56) Entgegenhaltungen:
- EP-A1- 1 591 970
- EP-A1- 1 612 746
- EP-A2- 1 617 385
- EP-A2- 1 680 961
- EP-A2- 1 688 042
- WO-A1-91/12597
- WO-A2-98/25240
- DE-A1- 3 145 792
- DE-A1- 3 815 466
- DE-A1- 10 116 423
- DE-A1-102004 019 905
- DE-A1-102005 012 536
- DE-U1- 20 302 346
- GB-A- 2 308 287
- US-A- 4 100 848

## Beschreibung

Die Erfindung betrifft eine Backwarenausgabe vorrichtung nach dem Oberbegriff des Anspruchs 1.

Derartige Vorrichtungen zur Ausgabe von Backwaren mit einem vorgeschalteten automatischen Durchlaufbackofen, der insbesondere zur Aufstellung in Supermärkten Verwendung findet, sind beispielsweise aus der EP 1 688 042 A2 der Anmelderin bekannt. Hierbei werden fertig gebackene Brötchen mit einem Förderband, das parallel zur Front einer Ausgabeeinheit verläuft, zu einem Fallschacht gefördert, durch den sie in ein Ausgabefach oder direkt in eine Tüte fallen. Breitere Baguette hingegen werden nach vorne abgeworfen und können über ein Ausgabefach entnommen werden.

Es besteht allerdings noch Bedarf an einer Vorrichtung, bei der eine schnelle und gleichzeitig platzsparende Ausgabe der Backwaren ermöglicht wird. Diese zur Verfügung zu stellen, ist Aufgabe der vorliegenden Erfindung.

Diese Aufgabe wird durch die Merkmale des Anspruchs 1 gelöst.

Die Vorteile der Erfindung bestehen insbesondere darin, dass die Abgabeeinrichtung einerseits direkt von einem der Überführungsmittel mit mindestens einer Backware beschickbar ist, und andererseits weitere Backwaren einen Umweg über die Zwischenfördereinrichtung machen, bevor sie auf die Abgabeeinrichtung gelangen. Demgemäß kann die Abgabeeinrichtung sowohl direkt von einem Überführungsmittel als auch über die Zwischenfördereinrichtung mit jeweils mindestens einer Backware beladen werden. Zuerst wird also die Abgabeeinrichtung direkt von einem Überführungsmittel beschickt und nach Kundenanforderung zur Weitergabe mindestens einer Backware an das Ausgabefach betätigt. Anschließend transportieren die Zwischenfördermittel mindestens eine weitere Backware zur Abgabeeinrichtung. Eine solche Aufteilung ist sehr platzsparend, erlaubt aber auch gleichzeitig ein extrem schnelles Nachliefern der Backwaren zur Abgabeeinrichtung.

Nach dem Vorgesagten ist es zweckmäßig, wenn die Transportrichtungen der Backwaren zur Abgabeeinrichtung einerseits direkt von einem der Überführungsmittel und andererseits von der Zwischenfördereinrichtung im Wesentlichen senkrecht zueinander verlaufen. Somit kann eine die Platzverhältnisse optimal ausnutzende Vorrichtung zur Verfügung gestellt werden. Dies ist insbesondere In Supermärkten von Wichtigkeit, da in diesen ein rigoroses Platzmanagement herrscht.

Besonders bevorzugt ist die Abgabeeinrichtung als Wippe ausgebildet, was auch als eigener Erfindungsaspekt angesehen werden kann. Diese Ausgestaltung ermöglicht eine die Backwaren besonders schonende Umlenkung. Das unerwünschte Abplatzen von Backwarenkruste wird wirkungsvoll vermieden. Zudem nimmt eine Wippe wenig Platz ein, da deren Länge im Bereich einer Backwarenlänge gewählt werden kann. Die Schwenkachse der Wippe kann insbesondere entweder parallel zur Ausgabefront oder - was bevorzugt ist - senkrecht zu dieser verlaufen. An die Wippe kann sich insbesondere eine Rutsche anschließen, welche die Backwaren zu einem Ausgabefach leitet.

Ein weiteres vorteilhaftes und platzoptimiertes Ausführungsmerkmal sieht vor, dass die Abgabeeinrichtung und die Zwischenfördereinrichtung nebeneinander - und vorzugsweise miteinander fluchtend - angeordnet und zusammen im Wesentlichen die Breite eines Trägers aufweisen. Die Abgabeeinrichtung und die Zwischenfördereinrichtung verlaufen hierbei vorteilhafterweise parallel zu der Vorderseite der Vorrichtung, wobei diese Vorderseite in aller Regel dem Verkaufsraum eines Supermarkts o.ä., d.h. dem Kunden, zugewandt ist.

Die Backwaren sind in aller Regel auf jedem der Träger nebeneinander angeordnet, wobei die Träger parallel zur Ausgabefront der Ausgabeeinheit ausgerichtet sind. Durch die zweifache Belademöglichkeit der Abgabeeinrichtung ist es möglich, dass die Überführungsmittel mindestens eine Backware von einem der Träger direkt auf die Abgabeeinrichtung fördern, während die anderen Backwaren dieses Trägers von den Überführungsmitteln zunächst auf die Zwischenfördereinrichtung transportiert werden. Die Förderrichtungen der Backwaren auf die Abgabeeinrichtung und auf die Zwischenfördereinrichtung sind hierbei gleich und weisen bevorzugt zu der Ausgabefront bzw. der dem Kunden zugewandten Vorderseite der Vorrichtung. Von der Zwischenfördereinrichtung kann dann - nach Entleerung der Abgabeeinrichtung - die der Abgabeeinrichtung nächstliegende Backware parallel zur Vorderseite der Vorrichtung auf die Abgabeeinrichtung gefördert werden.

Eine dementsprechende, vorteilhafte Weiterbildung sieht vor, dass die Zwischenfördereinrichtung mindestens einen Linearförderer umfasst, welches bevorzugt als Förderband ausgebildet ist, welches die Backwaren getaktet auf die Abgabeeinrichtung zu fördern vermag.

Die Überführungsmittel umfassen vorzugsweise Abwurfmittel für die Backwaren, beispielsweise zum Abwerfen der Backwaren von den Trägern. Diese Abwurfmittel sind beispielsweise als Schwenkeinrichtungen ausgebildet, welche einen Träger derart schwenken, dass die auf ihm befindlichen Backwaren von ihm rutschen.

Die Überführungsmittel können zudem als vorzugsweise elektronisch gesteuerte Schieber ausgebildet sein, insbesondere zum Fördern der Backwaren auf die Zwischenfördereinrichtung bzw. die Abgabeeinrichtung.

Ein vorteilhaftes Ausführungsbeispiel sieht vor, dass die Überführungsmittel ein Zwischenlager für die Backwaren umfassen, wobei die Backwaren von den Trägern zunächst in diesem Zwischenlager gelagert werden, von dem sie dann zu der Abgabeeinrichtung bzw. der Zwischenfördereinrichtung transportiert werden. Eine solche Ausgestaltung verringert die Wartezeit eines Kunden, wenn zuvor in kurzer Zeit alle Backwaren, die sich auf der Abgabeeinrichtung und der Zwischenfördereinrichtung befanden, abverkauft wurden. Ohne ein Zwischenlager kann unter Umständen der Nachschub von einem entsprechend befüllten Träger aufgrund seiner Fahrzeit eine gewisse Zeit in Anspruch nehmen, die der Kunde als lästige Wartezeit empfinden könnte.

Es ist vorteilhaft, wenn die Schieber der Überführungsmittel unabhängig voneinander ansteuerbar sind. Somit kann je nach vollständiger oder teilweiser Beladung der Träger und/oder Beladung der Abgabeeinrichtung und Zwischenfördereinrichtung ein entsprechend individueller Transfer der einzelnen Backwaren erfolgen. Mit anderen Worten ist nicht ein einziger Schieber für alle zur Abgabeeinrichtung und Zwischenfördereinrichtung zu befördernden Backwaren zuständig. Vielmehr kann für jede Backware ein einzelner Schieber vorgesehen sein. Alternativ ist jeweils ein Schieber für mehrere, aber nicht für alle Backwaren vorgesehen.

In einer auch als separaten Erfindungsaspekt anzusehenden Ausgestaltung ist das vorgenannte Zwischenlager zur stets gleichzeitigen Beschickung mit einer Mehrzahl von Backwaren vorgesehen und ausgebildet, während für die Abförderung der Backwaren von dem Zwischenlager die vorgenannten einzeln ansteuerbaren Schieber vorgesehen sind. Die Beschickung des Zwischenlagers kann beispielsweise durch einen breiten, alle Backwaren erfassenden Schieber oder durch ein gemeinsames Abwerfen der Backwaren von einem Träger erfolgen. Die Förderrichtungen zur Beschickung des Zwischenlagers und zur Abförderung vom Zwischenlager sind vorzugsweise gleich.

Besonders bevorzugt ist eine elektronische Steuereinrichtung zum Steuern der Bewegungen der Träger, der Überführungsmittel, der Zwischenfördereinrichtung sowie der Abgabeeinrichtung vorgesehen. Mit entsprechend angeordneten Sensoren können die Beladezustände der verschiedenen Elemente an den verschiedenen Positionen gemessen und mit dem Bedarf bzw. den Kundenabrufen abgestimmt werden.

Die Erfindung betrifft gleichfalls einen Backautomaten mit einem Durchlaufbackofen sowie einer dem Ofen nachgeschalteten Vorrichtung wie vorbeschrieben.

Im Folgenden wird die Erfindung anhand von Figuren näher erläutert. Es zeigen schematisch:
- **Figur 1**: eine Seitenansicht einer Speicher- und einer Ausgabeeinheit (mit abgenommener Seitenverkleidung) sowie einen vorgeschalteten Backofen;
- **Figur 2**: eine Aufsicht auf einen Teil der Ausgabeeinheit der Vorrichtung gemäß der Figur 1;
- **Figur 3**: eine Vorderansicht der Vorrichtung gemäß der Figuren 1 und 2 (mit abgenommener Frontverkleidung);
- **Figur 4**: eine zweite Ausführungsform einer erfindungsgemäßen Vorrichtung in einer Teilseitenansicht;
- **Figur 5**: eine Aufsicht auf einen Teil der Ausgabeeinheit der Vorrichtung gemäß der Figur 4, und
- **Figur 6**: eine Teilvorderansicht der Vorrichtung gemäß der Figuren 4 und 5 (mit abgenommener Frontverkleidung).

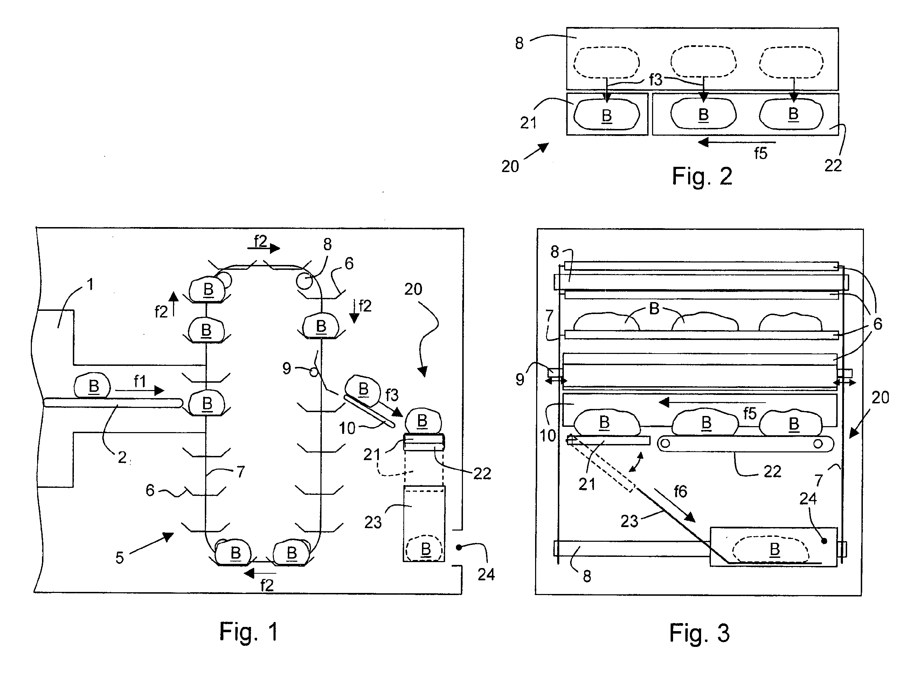

Die Figuren 1-3 zeigen eine erste Ausführungsform einer erfindungsgemäßen Vorrichtung, bei der ein Durchlaufbackofen 1 einer Speichereinheit 5 und einer Ausgabeeinheit 20 vorgeschaltet ist. Der Backofen 1 ist bevorzugt Teil eines Backautomaten zur Aufstellung in einem Supermarkt o.ä., bei dem mehrere nebeneinander durch den Backofen 1 laufende, fertig gebackene Backwaren B (hier: Brote B) mittels eines Förderbandes 2 zur Speichereinheit 5 transportiert werden (Pfeil f1), wo sie auf Trägern 6 in gleichbleibender Relativlage abgelegt werden. Bei den Ausführungsbeispielen gemäß der Figuren nehmen die Träger 6 jeweils drei Brote B nebeneinander auf. Eine Vielzahl von umlaufenden Trägern 6 (Pfeil f2) ist im Bereich ihrer Stirnseiten an Endlosförderketten 7 befestigt, welche durch Umlenkrollen 8 umgelenkt werden.

Die Träger 6 sind schwenkbar ausgebildet und können somit die auf ihnen abgelegten Backwaren B durch eine Kippbewegung auf ein der Ausgabeeinheit 20 zugewandtes, schräg abwärts führendes Leitblech 10 abgeben (Pfeil f3). Die Kippbewegung der Träger 6 geringfügig oberhalb des Leitbleches 10 wird durch seitlich angeordnete und linear verfahrbare Zapfen 9 realisiert, die bei Anforderung von Backwaren B durch eine elektronische Ansteuerung in Axialrichtung der Träger 6 aus ihrer Ruheposition aufeinander zu bewegt werden. Die äußere Unterseite des entsprechenden Trägers 6 gleitet an den beiden Zapfen 9 entlang, wobei der Träger 6 in eine Kippbewegung versetzt wird (s. Figur 1). Die Backwaren B auf diesem Träger 6 rutschen dann auf dem Leitblech 10 abwärts (Pfeil f3), während der Träger 6 nach Passieren der Zapfen 9 wieder in seine Normallage schwenkt und die Zapfen 9 in ihre Ruheposition verfahren werden.

Gemäß der in den Figuren 1- 3 gezeigten Ausführungsform gelangen die Backwaren B vom Leitblech 10 auf zwei verschiedene Ausgabemittel der Ausgabeeinheit 20 (jeweils Pfeil 3). Es sind dies einerseits eine Zwischenfördereinrichtung 22 und andererseits eine neben dieser angeordnete Abgabeeinrichtung 21, die hier als Wippe 21 ausgebildet ist, wobei die beiden Einrichtungen 21, 22 miteinander fluchtend parallel zur Vorderseite der Vorrichtung verlaufen. Die Zwischenfördereinrichtung 22 nimmt vorliegend zwei Brote B auf, während ein Brot B auf die Wippe 21 gelangt. Die Wippe 21 ist durch ein elektronisches Steuerkommando bei Kundenanforderung eines Brotes B nach unten verschwenkbar (s. insbesondere die Strichelung der Wippe 21 in Figur 3 sowie den zugeordneten Doppelpfeil), wobei das auf der Wippe 21 lagernde Brot B entlang einer Ausgaberutsche 23 zu einem von der Vorderseite der Vorrichtung für den Kunden erreichbaren Ausgabefach 24 gleitet (Pfeil f6), an dem der Kunde das Brot B entnehmen kann.

Die Wippe 21 kann nach Hochschwenken ein neues Brot B aufnehmen, welches von der elektronisch getakteten Zwischenfördereinrichtung 22, die vorliegend als Linearförderband ausgebildet ist, an die Wippe 21 übergeben wird (Pfeil f5). Die Wippe 21 wird vorzugsweise ohne vorheriges Abwarten einer neuen Kundenanforderung beschickt, da diese somit bei der nächsten Anforderung lediglich verschwenkt werden muss, um ein Brot in das Ausgabefach 24 zu leiten.

Sind sowohl Wippe 21 als auch Zwischenfördereinrichtung 22 leer, wird durch einen entsprechenden Befehl der elektronischen Steuereinrichtung (nicht dargestellt) ein mit Broten B befüllter Träger 6 zu dem Leitblech 8 gefahren, um die drei Brote B auf die Wippe 21 und die Zwischenfördereinrichtung 22 abzuwerfen, von wo aus wiederum ein Kundenabruf schnell bedient werden kann.

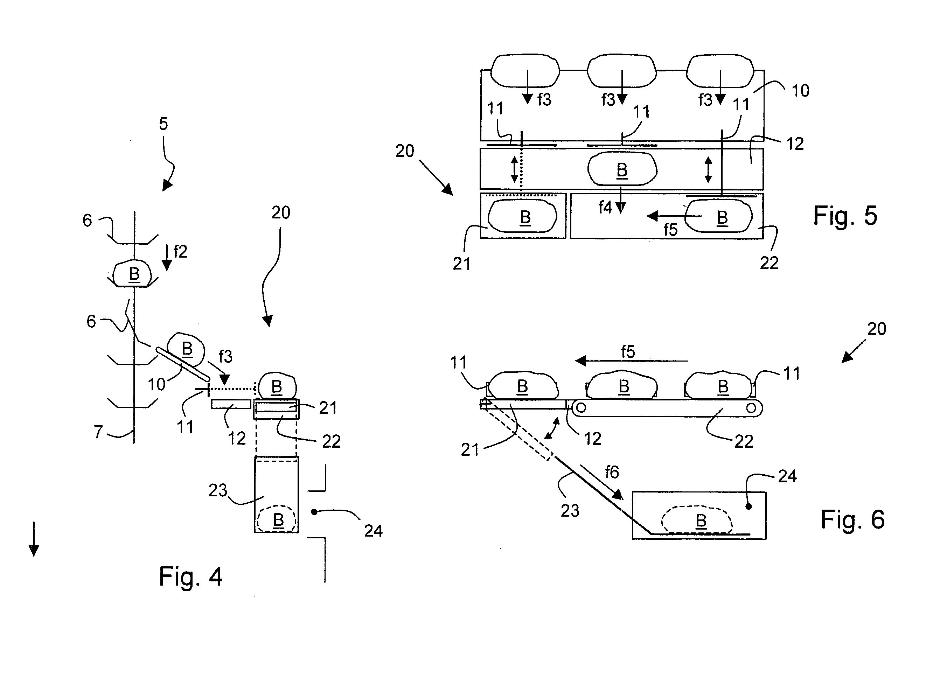

In den Figuren 4-6 ist ein zweites Ausführungsbeispiel der erfindungsgemäßen Vorrichtung abgebildet, wobei hier lediglich Teilausschnitte wiedergegeben sind. Die nicht dargestellten Merkmale können insbesondere und ohne weiteres denjenigen des in den Figuren 1-3 gezeigten Ausführungsbeispiels entsprechen. Der wesentliche Unterschied zwischen beiden Ausführungsformen besteht darin, dass bei derjenigen der Figuren 4-6 ein Zwischenlager 12 vorgesehen sind, in das die Brote B - vom Leitblech 10 geführt - gelangen (Pfeil f3) und dort zwischengelagert werden. Sind die Wippe 21 und die Zwischenfördereinrichtung 22 leer, können diese ohne Verzögerung vom Zwischenlager 12 befüllt werden (Pfeil f4). Hierzu sind unabhängig voneinander ansteuerbare Schieber 11 vorgesehen (in Figur 4 gestrichelt dargestellt), wobei jeweils ein Schieber 11 ein einzelnes Brot 10 von dem Zwischenlager 12 auf die Wippe 21 bzw. die Zwischenfördereinrichtung 22 zu schieben vermag. Die Schieberichtung (Pfeil f4) ist hierbei senkrecht zur Förderrichtung der Zwischenfördereinrichtung 22 zur Wippe 21 (Pfeil f5).

Aufgrund des Zwischenlagers 12 kann eine Vorhaltung von Broten B realisiert werden, die bei mehreren, kurz hintereinander folgenden Kundenanforderungen für eine schnelle Beschickung der Abgabeeinrichtung 21 sorgt. Falls mehr als drei Brote B in sehr kurzen Abständen geordert werden, sind nach Ausgabe der ersten drei Brote B - ohne Rücksicht auf die Lage und Befüllung einzelner Träger 6 - sehr schnell weitere drei Brote B von dem Zwischenlager 12 auf die hier als Wippe ausgebildete Abgabeeinrichtung 21 bzw. die Fördereinrichtung 22 transportierbar. In der Figur 5 ist die Beschickung eines Zwischenlagers 12 mit drei weiteren Broten B, die sich zuvor auf einem gemeinsamen Träger 6 befanden, mit den Pfeilen f3 angedeutet.

Die Abgabeeinrichtung 21 mit ihren Beschickungsmöglichkeiten - sowohl direkt von den Überführungsmitteln als auch indirekt unter Zwischenschaltung der Zwischenfördereinrichtung 22 - bietet den Vorteil, dass eine platzsparende und gleichzeitig schnelle Abgabe der Brote B ermöglicht wird. Ein Abplatzen von Brotkruste wird zudem durch eine schonende Weitergabe der Brote B weitestgehend verhindert, wenn zudem die Abgabeeinrichtung 21 wie hier dargestellt als Wippe 21 ausgebildet ist, da die Brote B in diesem Fall keine hohe Fallstrecke überwinden müssen. Die Wippe 21 ragt zudem nicht seitlich - bei Ansicht von der Vorderseite der Vorrichtung - über die Träger 6 hinaus, so dass die Breite der Vorrichtung sehr gering gehalten werden kann, s. insbesondere Figuren 2, 3 und 5, 6.

Für beide in den Figuren dargestellten Ausführungsbeispiele gilt, dass die Transportrichtung von den Übergabemitteln 10 bzw. 10, 11, 12 auf die Wippe 21 bzw. auf die Zwischenfördereinrichtung 22 (Pfeil f3 bzw. Pfeile 3, 4) senkrecht zur Transportrichtung der Backwaren B von der Zwischenfördereinrichtung 22 auf die Wippe 21 ist (Pfeil f5).

Die beschriebenen Ausführungsbeispiele sind nicht als abschließend zu verstehen. Abwandlungen innerhalb der Ansprüche sind ohne weiteres möglich. So können beispielsweise Schieber zur Entleerung der Träger vorgesehen sein. Die Zwischenfördereinrichtung kann ebenfalls als eine oder mehrere Wippen ausgebildet sein. Auch muss die Abgabeeinrichtung nicht als Wippe ausgebildet sein, auch wenn diese hinsichtlich der schonenden Weitergabe der Backwaren momentan bevorzugt ist.

### Bezugszeichenliste

- 1: Backofen
- 2: Förderband
- 5: Speichereinheit
- 6: Träger
- 7: Endlosförderkette
- 8: Umlenkrollen
- 9: Zapfen
- 10: Leitblech
- 11: Schieber
- 12: Zwischenlager
- 20: Ausgabeeinheit
- 21: Abgabeeinrichtung
- 22: Zwischenfördereinrichtung
- 23: Ausgaberutsche
- 24: Ausgabefach

## Patentansprüche

1. Backwarenausgabe vorrichtung zum Kombinieren mit einem vorzuschaltenden Durchlaufbackofen (1), mit einer Vielzahl von umlaufenden Trägern (6) zum Speichern der gebackenen Backwaren (B), mit Überführungsmitteln (9, 10, 11, 12) sowie mit Ausgabemitteln (21, 22, 23, 24), wobei die gebackenen Backwaren (B) mittels der Überführungsmittel (9, 10, 11, 12) von den Trägern (6) zu den Ausgabemitteln (21, 22, 23, 24) überführt werden, und wobei die Ausgabemittel (21, 22, 23, 24) eine Abgabeeinrichtung (21) und ein Ausgabefach (24) umfassen, wobei die Backwaren (B) von der Abgabeeinrichtung (21) zu dem Ausgabefach (24) überführt werden, **dadurch gekennzeichnet, dass** die Ausgabemittel (21, 22, 23, 24) zusätzlich eine zwischen die Überführungsmittel (9, 10, 11, 12) und die Abgabeeinrichtung (21) geschaltete Zwischenfördereinrichtung (22) umfassen, wobei Backwaren (B) von jeweils einem Träger (6) einerseits direkt von den Überführungsmitteln (9, 10, 11, 12) zur Abgabeeinrichtung (21) und andererseits von den Überführungsmitteln (9, 10, 11, 12) zur Zwischenfördereinrichtung (22) und weiter zur Abgabeeinrichtung (21) überführbar sind.

2. Vorrichtung nach Anspruch 1, **dadurch gekennzeichnet, dass** die Transportrichtungen der Backwaren (B) zur Abgabeeinrichtung (21) durch einer-seits direkten Transport von einem der Überführungsmittel (10, 11, 12) auf die Abgabeeinrichtung (21) und andererseits durch Transport von der Zwischenfördereinrichtung (22) auf die Abgabeeinrichtung (21) im Wesentlichen senkrecht zueinander verlaufen.

3. Vorrichtung nach einem der vorhergehenden Ansprüche, **dadurch gekennzeichnet, dass** die Abgabeeinrichtung (21) und die Zwischenfördereinrichtung (22) nebeneinander angeordnet sind und im Wesentlichen die Breite eines Trägers (6) aufweisen.

4. Vorrichtung nach einem der vorhergehenden Ansprüche, **dadurch gekennzeichnet, dass** die Abgabeeinrichtung (21) als Wippe ausgebildet ist, welche die mindestens eine Backware (B) durch eine Schwenkbewegung zu dem Ausgabefach (24) lenkt.

5. Vorrichtung nach einem der vorhergehenden Ansprüche, **dadurch gekennzeichnet, dass** die Überführungsmittel (9, 10, 11, 12) ein Zwischenlager (12) für die Backwaren (B) umfassen, von denen sie zu der Abgabeeinrichtung (21) bzw. der Zwischenfördereinrichtung (22) transportierbar sind.

6. Vorrichtung nach einem der vorhergehenden Ansprüche, **dadurch gekennzeichnet, dass** die Überführungsmittel (9, 10, 11, 12) Abwurfmittel (9) umfassen, insbesondere zum Abwerfen der Backwaren (B) von den Trägern (6).

7. Vorrichtung nach einem der vorhergehenden Ansprüche, **dadurch gekennzeichnet, dass** die Überführungsmittel (9, 10, 11, 12) elektronisch gesteuerte Schieber (11) umfassen, insbesondere zum Schieben der Backwaren (B) auf die Abgabeeinrichtung (21) bzw. auf die Zwischenfördereinrichtung (22).

8. Vorrichtung nach Anspruch 7, **dadurch gekennzeichnet, dass** jeder Schieber (11) jeweils nur zum Schieben eines Teils der Backwaren (B) von dem Zwischenlager (12) auf die Abgabeeinrichtung (21) bzw. die Zuführeinrichtung (22) vorgesehen ist.

9. Vorrichtung nach einem Anspruch 7 oder 8, **dadurch gekennzeichnet, dass** die Schieber (11) unabhängig voneinander ansteuerbar sind.

10. Vorrichtung nach einem der vorhergehenden Ansprüche, **dadurch gekennzeichnet, dass** die Zwischenfördereinrichtung (22) mindestens einen Linearförderer, vorzugsweise ein Förderband umfasst, welches die Backwaren (B) getaktet nacheinander auf die Abgabeeinrichtung (21) zu fördern vermag.

11. Vorrichtung nach einem der vorhergehenden Ansprüche, **dadurch gekennzeichnet, dass** die als Wippe ausgebildete Abgabeeinrichtung (21) die auf ihr lagernde mindestens eine Backware (B) durch ihre Schwenkbewegung auf eine Ausgaberutsche (23) zu fördern vermag, die zum Ausgabefach (24) führt.

12. Vorrichtung nach einem der vorhergehenden Ansprüche, **gekennzeichnet durch** eine elektronische Steuereinrichtung zum Steuern der Bewegungen der Träger (6), der Überführungsmittel (9, 11), der Zwischenfördereinrichtung (22) sowie der Abgabeeinrichtung (21).

13. Backautomat mit einem Durchlaufbackofen (1) sowie einer dem Durchlaufbackofen (1) nachgeschalteten Vorrichtung zur Ausgabe von Backwaren nach einem der vorhergehenden Ansprüche.

## Claims

1. Device for dispensing baked goods for combination with a continuous baking oven (1) mounted upstream with a plurality of peripheral carriers (6) for storing the baked goods (B), with transfer means (9, 10, 11, 12) as well as with dispensing means (21, 22, 23, 24), the baked goods (B) being transferred from the carriers (6) to the dispensing means (21, 22, 23, 24), by means of transfer means (9, 10, 11, 12), the dispensing means (21, 22, 23, 24) comprising a delivery device (21) and a dispensing compartment (24) the baked goods (B) being transferred from the delivery device (21) to the dispensing compartment (24), **characterized in that** the dispensing means (21, 22, 23, 24) additionally comprise an intermediate conveyor device (22), mounted between the transfer means (9, 10, 11, 12) and the delivery device (21), wherein baked goods (B) can be transferred from a carrier (6), on the one hand, directly by the transfer means (9, 10, 11, 12) to the delivery device (21) and, on the other hand, by the transfer means (9, 10, 11, 12) to the intermediate conveyor device (22) and further on to the delivery device (21).

2. Device according to claim 1, **characterized in that** the directions in which the baked goods (B) are transported to the delivery device (21) run largely perpendicular to one another, on the one hand, by being transported directly from one of the transfer means (10, 11, 12) to the delivery device (21) and, on the other hand, by being transported from the intermediate conveyor device (22) to the delivery device (21).

3. Device according to one of the preceding claims, **characterized in that** the delivery device (21) and the intermediate conveyor device (22) are arranged side by side and have essentially the width of a carrier (6).

4. Device according to one of the preceding claims, **characterized in that** the delivery device (21) is executed as tilting conveyor, which guides the at least one baked good (B) through a swiveling motion to the dispensing compartment (24).

5. Device according to one of the preceding claims, **characterized in that** the transfer means (9, 10, 11, 12) comprise a temporary storage compartment (12) for the baked goods (B), from which they can be transported to the delivery device (21) and the intermediate conveyor device (22), respectively.

6. Device according to one of the preceding claims, **characterized in that** the transfer means (9, 10, 11, 12) comprise dropping means (9), especially for dropping the baked goods (B) off the carriers (6).

7. Device according to one of the preceding claims, **characterized in that** the transfer means (9, 10, 11, 12) comprise electronically controlled sliders (11), especially for sliding the baked goods (B) onto the delivery device (21) and the intermediate conveyor device (22), respectively.

8. Device according to claim 7, **characterized in that** each slider (11) has in each case been provided only for sliding one portion of the baked goods (B) from the temporary storage compartment (12) onto the delivery device (21) and the supply device (22), respectively.

9. Device according to claim 7 or 8, **characterized in that** the sliders (11) can be controlled independently from one another.

10. Device according to one of the preceding claims, **characterized in that** the intermediate conveyor device (22) has at least one linear conveyor, preferably a conveyor belt, which transports the baked goods (B) successively in cycles to the delivery device (21).

11. Device according to one of the preceding claims, **characterized in that** the delivery device (21) executed as a tilting conveyor is capable of transporting the at least one baked good (B) lying on it by swiveling it to a dispensing slide (23) that leads to the dispensing compartment (24).

12. Device according to one of the preceding claims, **characterized by** an electronic control device for controlling the movements of the carriers (6), the transfer means (9, 11), the intermediate conveyor device (22), and the delivery device (21).

13. Automatic baking machine with a continuous baking oven (1) and a device mounted downstream from the continuous baking oven (1) for dispensing baked goods according to one of the preceding claims.

## Revendications

1. Dispositif de sortie de produits de boulangerie et de pâtisserie pour la combinaison avec un four tunnel (1) devant être installé en amont, avec une multitude de supports circonférentiels (6) pour le stockage des produits de boulangerie et de pâtisserie (B) cuits au four, avec des moyens de transfert (9, 10, 11, 12) ainsi que des moyens de sortie (21, 22, 23, 24), sachant que les produits de boulangerie et de pâtisserie (B) cuits au four sont transférés à l'aide des moyens de transfert (9, 10, 11, 12) depuis les supports (6) vers les moyens de sortie (21, 22, 23, 24), et sachant que les moyens de sortie (21, 22, 23, 24) comportent un dispositif de distribution (21) et un compartiment de distribution (24), sachant que les produits de boulangerie et de pâtisserie (B) sont transférés depuis le dispositif de distribution (21) dans le compartiment de distribution (24), **caractérisé en ce que** les moyens de sortie (21, 22, 23, 24) comportent en outre un dispositif de transport intermédiaire (22) intercalé entre les moyens de transfert (9, 10, 11, 12) et le dispositif de distribution (21), sachant que les produits de boulangerie et de pâtisserie (B) peuvent être transférés par respectivement un support (6), d'une part, directement des moyens de transfert (9, 10, 11, 12) vers le dispositif de distribution (21) et, d'autre part, depuis les moyens de transfert (9, 10, 11, 12) vers le dispositif de transport intermédiaire (22) puis vers le dispositif de distribution (21).

2. Dispositif selon la revendication 1, **caractérisé en ce que** les sens de transport des produits de boulangerie et de pâtisserie (B) vers le dispositif de distribution (21) ont une allure essentiellement perpendiculaire l'une par rapport à l'autre, d'une part par transport direct depuis l'un des moyens de transfert (10, 11, 12) sur le dispositif de distribution (21) et, d'autre part, par transport depuis le dispositif de transport intermédiaire (22) sur le dispositif de distribution (21).

3. Dispositif selon l'une des revendications précédentes, **caractérisé en ce que** le dispositif de distribution (21) et le dispositif de transport intermédiaire (22) sont disposés l'un à côté de l'autre et présentent essentiellement la largeur d'un support (6).

4. Dispositif selon l'une des revendications précédentes, **caractérisé en ce que** le dispositif de distribution (21) se présente sous la forme d'une bascule, qui dirige par un mouvement de pivotement l'au moins un produit de boulangerie et de pâtisserie (B) dans le compartiment de distribution (24).

5. Dispositif selon l'une des revendications précédentes, **caractérisé en ce que** les moyens de transfert (9, 10, 11, 12) comportent respectivement un entreposage intermédiaire (12) pour les produits de boulangerie et de pâtisserie (B), à partir desquels ils peuvent être transportés vers le dispositif de distribution (21) ou le dispositif de transport intermédiaire (22).

6. Dispositif selon l'une des revendications précédentes, **caractérisé en ce que** les moyens de transfert (9, 10, 11, 12) comportent des moyens de largage (9), en particulier pour larguer les produits de boulangerie et de pâtisserie (B) depuis les supports (6).

7. Dispositif selon l'une des revendications précédentes, **caractérisé en ce que** les moyens de transfert (9, 10, 11, 12) comportent des coulisseaux à commande électronique (11), en particulier pour pousser les produits de boulangerie et de pâtisserie (B) sur le dispositif de distribution (21) ou sur le dispositif de transport intermédiaire (22).

8. Dispositif selon la revendication 7, **caractérisé en ce que** chaque coulisseau (11) est prévu respectivement pour pousser seulement une partie des produits de boulangerie et de pâtisserie (B) depuis l'entreposage intermédiaire (12) sur le dispositif de distribution (21) ou sur le dispositif d'amenée (22).

9. Dispositif selon l'une des revendications 7 ou 8, **caractérisé en ce que** les coulisseaux (11) peuvent être commandés les uns indépendamment des autres.

10. Dispositif selon l'une des revendications précédentes, **caractérisé en ce que** le dispositif de transport intermédiaire (22) comporte au moins un convoyeur linéaire, de préférence une bande de transport, qui peut transporter les produits de boulangerie et de pâtisserie (B) les uns après les autres de manière cadencée sur le dispositif de distribution (21).

11. Dispositif selon l'une des revendications précédentes, **caractérisé en ce que** le dispositif de distribution se présentant sous la forme d'une bascule (21) peut, par son mouvement de pivotement, transporter l'au moins un produit de boulangerie et de pâtisserie (B) posé sur lui sur un glissoir de distribution (23) conduisant au compartiment de distribution (24).

12. Dispositif selon l'une des revendications précédentes, **caractérisé par** un dispositif de commande électronique pour la commande des mouvements des supports (6), des moyens de transfert (9, 11), du dispositif de transport intermédiaire (22) ainsi que du dispositif de distribution (21).

13. Four automatique avec un four tunnel (1) ainsi qu'un dispositif installé en aval du four tunnel (1) pour la distribution de produits de boulangerie et de pâtisserie selon l'une des revendications précédentes.
